# EUROPEAN PATENT SPECIFICATION

(11) **EP 3 732 031 B1**
(45) Date of publication and mention of the grant of the patent: **30.03.2022**
(21) Application number: 18836658.7
(22) Date of filing: 21.12.2018
(51) Int. Cl.: B29D 30/00, B29D 30/20, B29D 30/26

(54) **PROCESS AND PLANT FOR PRODUCING TYRES FOR VEHICLE WHEELS**
VERFAHREN UND ANLAGE ZUR HERSTELLUNG VON REIFEN FÜR FAHRZEUGRÄDER
PROCESSUS ET INSTALLATION POUR LA PRODUCTION DE PNEUS POUR DES ROUES DE VÉHICULE

(30) Priority: 28.12.2017 IT 201700150267
(43) Date of publication of application: 04.11.2020
(73) Proprietor: Pirelli Tyre S.p.A., 20126 Milano (IT)
(72) Inventor: MANCINI, Gianni, 10141 Torino (IT); DE COL, Christian, 20126 Milano (IT)
(74) Representative: Porta & Consulenti Associati S.p.A.
(86) International application number: PCT/IB2018/060497
(87) International publication number: WO 2019/130190

(56) References cited:
- WO-A1-2007/074482
- WO-A1-2009/040594
- WO-A1-2011/018687
- WO-A1-2013/093791
- WO-A1-2015/193844
- WO-A1-2016/108098

## Description

The invention relates to a process and a plant for producing tyres for vehicle wheels.

A tyre for vehicle wheels typically comprises a carcass structure, shaped according to a substantially toroidal configuration, comprising at least one carcass ply having axially opposite ends. The latter are engaged at respective annular anchoring structures, each of them normally formed by at least one substantially circumferential annular insert called "bead core" on which at least one filling insert is generally applied, tapering radially going away from the rotation axis. The annular anchoring structures are arranged in areas usually identified with the name "beads". The beads have an inner diameter substantially corresponding to a so-called "fitting diameter" of the tyre on a respective mounting rim.

The tyre also comprises a crown structure comprising at least one belt strip arranged in radially outer position with respect to the carcass ply and a radially outer tread band with respect to the belt strip. On the tread band, typically there are shaped longitudinal and transversal grooves, arranged to define a desired tread pattern. Between the tread band and the belt strip(s) it is possible to arrange a so-called "underlayer" made of elastomeric material having properties suitable for ensuring a stable connection of the belt strip(s) with the tread band itself.

The tyre also comprises a pair of so-called sidewalls made of elastomeric material that represent the axially outer surfaces of the tyre, with respect to a middle plane perpendicular to the rotation axis of the tyre itself. For example, the sidewalls represent the axially outer surfaces with respect to the annular anchoring structures, to the carcass ply(-ies), to the belt strip(s) and possibly to at least one portion of tread band.

The sidewalls can be incorporated in the structure of the tyre according to two different alternative constructive schemes, respectively called "sidewall over tread" (SOT) and "tread over sidewall" (TOS).

In the TOS constructive scheme, the radially outer apices of the sidewalls are axially inner with respect to the side edges of the tread band, and in general arranged between the carcass ply(-ies) and the respective side edges of the belt structure.

In the SOT constructive scheme, the radially outer apices of the sidewalls are laterally juxtaposed and axially outer with respect to the respective side edges of the tread band.

In "tubeless" tyres, there is, in a radially inner position with respect to the carcass ply, at least one layer of elastomeric material, usually called "liner", having air-tightness characteristics and generally extending from one bead to another.

The production cycles of a tyre foresee that, following a building process in which the various structural components of the tyre itself are made and/or assembled, the built green tyres are transferred into a molding and vulcanization line where a molding and vulcanization process is carried out, adapted for defining the structure of the tyre according to a desired geometry and tread pattern.

The term "elastomeric material" is meant to indicate a composition comprising at least one elastomeric polymer and at least one reinforcing filler. Such a composition can also comprise additives like, for example, a cross-linking agent and/or a plasticizer. Thanks to the presence of the cross-linking agent, such a material can be cross-linked through heating, so as to form the final manufactured product.

The term "green tyre" is meant to indicate a tyre obtained by the building process and not yet molded and vulcanized.

The term "finished tyre" is meant to indicate a finished tyre obtained by the building process and subsequently molded and vulcanized.

The term "tyre" is meant to indicate a finished tyre or a green tyre.

The terms "axial", "axially", "radial", "radially", "circumferential" and "circumferentially" are used with reference to the tyre or to a drum used in the production process of the tyre.

In particular, the terms "axial" and "axially" are meant to indicate references/magnitudes arranged/measured or extending in a direction substantially parallel to the rotation axis of the tyre or of the drum.

The terms "radial" and "radially" are meant to indicate references/magnitudes arranged/measured or extending in a direction perpendicular to the rotation axis of the tyre or of the drum and lying in a plane comprising such a rotation axis.

The terms "circumferential" and "circumferentially" are meant to indicate references/magnitudes arranged/measured or extending along a circumference developing around the rotation axis of the tyre or of the drum. The term "elementary semi-finished product" is meant to indicate a continuous elongated element and/or a "strip like element". Such elementary semi-finished products lend themselves to being used in an appropriate amount to make up one or more of the constituent elements of the tyre described above, without requiring the storage of semi-finished products.

The expression "continuous elongated element" is meant to indicate an elongated manufactured product made of only elastomeric material or comprising at least one cord made of textile and/or metal and/or hybrid material, extending parallel to the longitudinal extension of the continuous elongated element itself and incorporated or at least partially coated by at least one layer of elastomeric material.

The term "strip like element" is meant to indicate an elongated manufactured product cut to size so as to have its own length greater than its own width, having a profile in cross section of flattened shape and comprising one or more cords generally made of textile and/or metal and/or hybrid material, extending parallel to the length and to the longitudinal extension of the strip like element itself and incorporated or at least partially coated by at least one layer of elastomeric material.

The term "component" or "structural component" of a tyre is meant to indicate any portion thereof capable of carrying out its own function or a part thereof. Examples of structural components of the tyre are: liner, underliner, anti-abrasive inserts, bead core, bead fillers, carcass ply(-ies), belt strip(s), under-belt layer, underlayer of the tread band, sidewalls, sidewall inserts, tread band, textile or metal reinforcements, reinforcing elements made of elastomeric material, etc. or a part of them.

The term "carcass sleeve" is meant to indicate a sleeve in substantially cylindrical form comprising at least one carcass ply. Moreover, the carcass sleeve can comprise, for example, at least one among: anti-abrasive inserts, liner, underliner, sidewall inserts, reinforcements, under-belt insert. For the purposes of the present description and claims, the carcass sleeve is devoid of beads. In other words, the carcass sleeve is devoid of anchoring annular structures.

The term "carcass structure" is meant to indicate a carcass sleeve having axially opposite ends engaged with respective anchoring annular structures. Preferably, each anchoring annular structure comprises a substantially circumferential annular insert called "bead core" on which at least one filling insert is preferably applied.

The term "crown structure" is meant to indicate the assembly formed at least from belt structure, comprising at least one belt strip, and tread band.

The term "tyre being processed" is meant to indicate a tyre in the various steps of the production process that go from building the first elements constituting the carcass sleeve and/or the crown structure until the finished tyre is obtained.

The term "building cycle time" is meant to indicate the time that passes between one tyre being processed exiting from a building line/path, and the next tyre exiting.

WO 2015/193844 discloses a process and plant for building different model of green tyres for vehicle wheels, wherein a first carcass structure is built on a first forming support in a first working station, and the first workstation comprises a waiting unit for temporarily storing the first forming support.

WO 2011/018687 to the same Applicant describes a method and a plant for building tyres for vehicle wheels, in which each tyre comprises a carcass structure and a crown structure. The building of the carcass structure is carried out in a carcass structure building line in which: a) a pair of support rings is associated with a forming drum in a support ring association work station; b) at least one structural component of the tyre being processed is built on the forming drum provided with said pair of support rings in at least one work station of the building line of the carcass structure; c) the pair of support rings is removed from the forming drum in a support ring removal work station; d) the pair of support rings dissociated from the forming drum is transferred into a temporary store for support rings; e) at least one further structural component of the tyre being processed on the forming drum devoid of the pair of support rings is built in a work station of the carcass structure building line. Once built, the carcass structure is transferred into a shaping and assembly station, remaining associated with the same forming drum on which it was built. In the shaping and assembly station, the carcass structure, remaining associated with said same forming drum, is toroidally shaped and assembled at the crown structure of the tyre being processed, coming from a crown structure building line wherein the crown structure has meanwhile been built. Then there is the removal of the shaped tyre from the aforementioned forming drum and the transfer into a molding and vulcanization line to obtain the finished tyre.

The Applicant has perceived the need to simplify the carcass structure building line from the structural and logistical point of view, so as to obtain advantages in terms of improvement of layout and accessibility to the work stations as well as of reduction of the building times, of the number of resources required and overall dimensions.

The Applicant has also perceived the need to make a further qualitative step in the performance of the finished tyres.

The Applicant has perceived that the aforementioned requirements can be satisfied by arranging the building of carcass structures so as to avoid the use of auxiliary support elements.

More precisely, the Applicant has found that the aforementioned requirements can be satisfied by dividing the building of a carcass structure into two building sub-steps or paths to respectively build a carcass sleeve on a first forming drum and a carcass structure on a second forming drum, the carcass structure being obtained by engaging axially opposite ends of the carcass sleeve with respective anchoring annular structures; all of this while providing a waiting station, for the passage of the tyre being processed between the two building sub-steps or paths, and dedicated transfer devices.

In accordance with a first aspect thereof, the invention relates to a process for producing tyres for vehicle wheels according to claim 1.

Preferably, for each tyre being processed, it is provided to build a carcass sleeve on a first forming drum.

Preferably, for each tyre being processed, it is provided to dissociate the carcass sleeve from the first forming drum, after having associated it with a first transfer device, and to transfer it into a waiting station by means of said first transfer device.

Preferably, in said waiting station, for each tyre being processed, it is provided to release the carcass sleeve from said first transfer device, after having associated it with a second forming drum.

Preferably, for each tyre being processed, it is provided to transfer the second forming drum, with the carcass sleeve associated with it, from said waiting station to a bead forming station to carry out, on the second forming drum, the engagement of axially opposite ends of the carcass sleeve to respective anchoring annular structures so as to form a carcass structure.

Preferably, for each tyre being processed, it is provided to transfer the second forming drum, with the carcass structure associated with it, from said bead forming station to said waiting station.

In accordance with a second aspect thereof, the invention relates to a plant for producing tyres for vehicle wheels according to claim 7.

Preferably, a carcass structure building line is provided.

Preferably, the carcass structure building line comprises a first building path comprising at least one work station for building, for each tyre being processed, a carcass sleeve on a first forming drum.

Preferably, the carcass structure building line comprises a waiting station.

Preferably, the carcass structure building line comprises a first transfer device. Preferably, the first transfer device is configured to engage the carcass sleeve, dissociate the carcass sleeve, thus engaged, from the first forming drum, transfer the carcass sleeve, dissociated from the first forming drum, into the waiting station and, in said waiting station, associate the carcass sleeve with a second forming drum.

Preferably, the carcass structure building line comprises a second building path.

Preferably, the second building path comprises a bead forming station to carry out, on the second forming drum, the engagement of axially opposite ends of the carcass sleeve with respective anchoring annular structures so as to form a carcass structure.

Preferably, the carcass structure building line comprises a second transfer device configured to transfer the second forming drum, with the carcass sleeve associated with it, from said waiting station to said bead forming station and to transfer the second forming drum, with the carcass structure formed on it and associated with it, from the bead forming station to said waiting station.

The Applicant considers that, using two different forming drums in two different building paths/sub-steps, arranging a suitable waiting station for connection between the two paths/sub-steps and suitably supporting the tyre being processed during the entire building process, the aforementioned solution makes it possible to simplify the building of carcass structures from the structural and logistical point of view, avoiding the use of auxiliary support elements. In particular, the advantages outlined above of improving layout and accessibility to the work stations as well as of reduction of the building times, of the number of resources required and of the overall dimensions are obtained, at the same time making it possible to maintain a high technological flexibility. The elimination of auxiliary support elements also makes it possible to further increase the quality and the performance of the finished tyres, preventing them from having potential imbalances or disuniformities linked to the removal step of the auxiliary support elements.

The Applicant also observes that, according to the aforementioned solution, during the building of the carcass structure, the tyre being processed (in particular, the carcass sleeve (first) and the carcass structure (after)) is always supported, without any discontinuity, by the first forming drum, by the first transfer device and by the second forming drum. More precisely, the first transfer device is adapted to support the carcass sleeve during the dissociation thereof from the first forming drum, the transfer thereof in the waiting station and the association thereof with the second forming drum so as to have the carcass sleeve always supported, without any discontinuity.

This makes it advantageously possible to obtain the correct centering and integrity of the green tyre being processed, during the entire building path thereof.

The present invention in at least one of the aforementioned aspects can have at least one of the following preferred features.

Preferably, before the association of the carcass sleeve with the second forming drum, it is provided to arrange the second forming drum so that the axial extension thereof corresponds to geometric features (for example section width and/or height of sidewalls) of the tyre being processed.

Preferably, the first forming drum is selected among N first forming drums having fitting diameter corresponding to that of the tyre being processed, among M different fitting diameters, where M and N are each an integer greater than or equal to 1.

The first forming drum is preferably taken from a storage area comprising N first forming drums for each fitting diameter, among M different fitting diameters.

Preferably, in said waiting station, the association of the carcass sleeve with said second forming drum is carried out by selecting the second forming drum that has, among M second forming drums having M different fitting diameters, fitting diameter corresponding to that of the tyre being processed, where M is an integer greater than or equal to 1.

Preferably, the engagement of axially opposite ends of the carcass sleeve with the respective anchoring annular structures is carried out by positioning the anchoring annular structures at the axially opposite ends of the carcass sleeve and folding said ends so as to form turnings that contain said anchoring annular structures.

Preferably, the engagement step of axially opposite ends of the carcass sleeve with the respective anchoring annular structures is preceded by a transfer step of bead cores, adapted for forming said anchoring annular structures, from a bead core storage station operatively associated with the bead forming station.

Preferably, it is provided to transfer the carcass structure from the waiting station to a shaping station adapted for toroidally shaping the carcass structure.

Preferably, before the transfer to the shaping station, the carcass structure is dissociated from the second forming drum (so as to be transferred to the shaping station without it).

Preferably, the carcass structure is dissociated from the second forming drum, after having associated it with a third transfer device, and transferred from the waiting station to the shaping station through said third transfer device.

The third transfer device is preferably adapted for supporting the carcass structure from the outside, more preferably through a suitably profiled rigid outer containment member.

Preferably, in the shaping station, the carcass structure is dissociated from the third transfer device, after having associated it with carcass structure engagement devices adapted for supporting said carcass structure during the toroidal shaping.

Preferably, in the shaping station, it is provided to arrange a third forming drum in a first radially contracted operative condition.

Preferably, in the shaping station, it is provided to arrange the third forming drum in radially inner position with respect to said carcass structure.

Preferably, it is provided to toroidally shape said carcass structure while said third forming drum, arranged in said first operative condition, is positioned inside the carcass structure.

Preferably, during or after the toroidal shaping of said carcass structure, it is provided to expand said third forming drum up to a second radially expanded operative condition.

Preferably, it is provided to associate the toroidally-shaped carcass structure with the third forming drum, expanded in said second radially expanded operative condition.

Preferably, it is provided to build a crown structure of the tyre being processed.

In a preferred embodiment, it is provided to build the crown structure of the tyre being processed directly on the toroidally-shaped carcass structure of the same tyre being processed.

Preferably, said building of the crown structure is carried out with the carcass structure associated with a third forming drum.

Preferably, it is provided to move said third forming drum, associated with said toroidally-shaped carcass structure, within a crown structure building line comprising at least one station for building at least one belt layer in radially outer position with respect to said carcass structure.

Preferably, it is provided to mold and vulcanize the green tyre in at least one molding and vulcanization line.

Preferably, the first transfer device is configured to support the carcass sleeve without any discontinuity during the dissociation from the first forming drum, the transfer into the waiting station and the association with the second forming drum. In other words, the first transfer device is configured to carry out the dissociation from the first forming drum, the transfer of the carcass sleeve and the association with the second forming drum so that the carcass sleeve is always supported, without any discontinuity, during the dissociation/association and transfer steps.

Preferably, the first transfer device is configured to support the carcass sleeve from the outside, more preferably by means of a suitable rigid outer containment member, suitably profiled. Preferably, said containment member is adapted for radially expanding/contracting to allow the dissociation/association of the carcass sleeve.

Preferably, the waiting station is configured to arrange, before the association of the carcass sleeve with the second forming drum, the second forming drum so that the axial extension thereof corresponds to geometric features (for example section width and/or height of sidewalls) of the tyre being processed.

Preferably, the first forming drum is different from the second forming drum.

Preferably, the first forming drum is different from the second forming drum in shape and/or size.

Preferably, the first forming drum is substantially cylindrical.

Preferably, the first forming drum has a circumferentially continuous surface.

Preferably, the first forming drum has a greater axial extension than the axial extension of the carcass sleeve of the tyre being processed.

Preferably, the first forming drum has a fixed axial extension, which is not adjustable.

Preferably, the first forming drum is adapted for contracting radially. This is to facilitate the dissociation of the carcass sleeve, once built, from the first forming drum.

Preferably, the second forming drum is substantially cylindrical.

Preferably, the second forming drum has a circumferentially continuous surface.

Preferably, the second forming drum has a shorter axial extension than the axial extension of the carcass sleeve of the tyre being processed. This allows the axial ends of the carcass sleeve to project axially from the second forming drum so as to allow the turning thereof around the anchoring annular structures for the formation of the beads.

Preferably, the second forming drum has adjustable axial extension.

Preferably, the secondo forming drum has two axial end portions that can move apart and together along an axial direction so as to increase and, respectively, decrease the axial extension of the second forming drum as a function of the geometric features (for example section width and/or height of the sidewalls) of the tyre being processed. This is in order to allow the axial dimension of the second forming drum to be adapted as a function of the geometric features (for example section width and/or height of the sidewalls) of the tyre being processed.

Preferably, the second forming drum has a greater deposition diameter than the fitting diameter of the tyre being processed.

The second forming drum is preferably adapted for radially contracting. This is in order to facilitate the dissociation of the carcass structure, once built, from the second forming drum.

Preferably, the first building path comprises a storage area of first forming drums.

Preferably, the first building path comprises movement devices adapted for taking the first forming drum from the storage area of first forming drums and loading it in said at least one work station.

The movement devices preferably comprise at least one robotized arm, preferably anthropomorphous. Even more preferably, said anthropomorphous robotized arm has at least 6 movement axes.

Preferably, the storage area is adapted for storing NxM first forming drums, where N and M are each an integer greater than or equal to 1, M represents a predetermined number of different fitting diameters and N represents a predetermined number of first forming drums having the same fitting diameter, among the M different fitting diameters.

Preferably, M is equal to 4 or 5.

Preferably, the M different fitting diameters are consecutive.

Preferably, the M different fitting diameters are selected in a range of fitting diameters having a lower limit of 13 inches.

Preferably, the M different fitting diameters are selected in a range of fitting diameters having an upper limit of 28 inches.

Preferably, N is greater than or equal to 2, more preferably it is greater than or equal to 5, even more preferably it is less than or equal to 20.

Preferably, the NxM first forming drums all have the same axial dimension. N and M can be the same or different from one another.

Preferably, the movement devices are adapted for taking from the storage area the first forming drum that has, among the M different fitting diameters, a fitting diameter corresponding to that of the tyre being processed. Preferably, the first building path comprises a plurality of work stations for building the carcass sleeve for the tyre being processed on the first forming drum.

Preferably, the first building path comprises movement devices adapted for moving the tyre being processed on the first forming drum between at least part of the plurality of work stations.

The movement devices preferably comprise at least one robotized arm, preferably anthropomorphous. Even more preferably, said anthropomorphous robotized arm has at least 6 movement axes.

Preferably, the first building path is configured to simultaneously build, in the plurality of work stations and for multiple tyres being processed, a corresponding multiple carcass sleeves on a corresponding multiple first forming drums.

Preferably, the first building path comprises movement devices adapted for taking (in sequence) the multiple first forming drums from the storage area of first forming drums and loading them (in sequence) into a first work station of said plurality of work stations.

Preferably, said waiting station comprises M second forming drums, one for each of the M different fitting diameters where M is an integer greater than or equal to 1.

Preferably, the first transfer device is configured to associate the carcass sleeve with the second forming drum that has, among the M different fitting diameters, a fitting diameter corresponding to that of the tyre being processed.

Preferably, the bead forming station is a single multi-fitting station. In other words, it is capable of operating on second forming drums having M different fitting diameters.

Preferably, the second building path also comprising a storage station of bead cores, which are adapted for forming said anchoring annular structures, said bead core storage station being operatively associated with the bead forming station.

Preferably, the plant also comprises a shaping station comprising shaping devices configured to shape the carcass structure according to a toroidal configuration.

Preferably, the plant also comprises a third transfer device configured to transfer the carcass structure from the waiting station to the shaping station.

Preferably, the shaping station comprises engagement devices adapted for engaging and supporting the carcass structure during the toroidal shaping.

Preferably, the third transfer device is configured to engage the carcass structure, dissociate the carcass structure thus engaged from the second forming drum, transfer the carcass structure, dissociated from the second forming drum, from the waiting station to the shaping station and associate the carcass structure to the engagement devices of the shaping station.

Preferably, the third transfer device is configured to support the carcass structure without any discontinuity during the dissociation from the second forming drum, the transfer from the waiting station to the shaping station and the association with the engagement devices of the carcass structure. In other words, the third transfer device is configured to carry out the dissociation from the second forming drum and the association with the engagement devices of the carcass structure so that the carcass structure is always supported, without any discontinuity, during the dissociation/association and transfer steps.

Preferably, the third transfer device is configured to support the carcass structure from the outside, for example by means of a suitable rigid outer containment member, suitably profiled.

Preferably, said containment member is adapted to expand/contract radially to allow the dissociation/association of the carcass structure.

Preferably, the shaping station comprises a third forming drum.

Preferably, the third forming drum is radially expandable/contractible.

Preferably, the third forming drum is substantially toroidal.

Preferably, the shaping station comprises actuator devices adapted for associating the third forming drum with the carcass structure.

Preferably, the third forming drum is configured to be engaged in the shaping station in radially inner position with respect to the carcass structure.

Preferably, the shaping station comprises actuator devices configured to radially expand the third forming drum inside the carcass structure.

Preferably, the shaping station is multi-fitting. In other words, it is capable of shaping carcass structures having M different fitting diameters.

Preferably, the third forming drum is capable of radially expanding/contracting so as to reproduce M different fitting diameters, where M is an integer greater than or equal to 1.

Preferably, for every fitting diameter, the third forming drum is preferably adapted for reproducing L third forming drums that differ from one another in geometric features (for example section width and/or height of the sidewalls) of the tyre being processed and/or different toroidal profiles, where L is an integer greater than or equal to 1. Preferably, L is at least equal to 2, more preferably at least greater than or equal to 5, even more preferably less than or equal to 15.

Preferably, the shaping station is configured to arrange, before the arrival of the carcass structure of the tyre being processed, said carcass structure engagement devices and the third forming drum so as to adapt them to the fitting diameter and/or to the geometric features (for example section width and/or height of the sidewalls) and/or to the toroidal profile of the tyre being processed.

Preferably, the plant also comprises a crown structure building line.

The crown structure building line preferably comprises at least one station for building at least one belt layer.

In a preferred embodiment, the crown structure building line is configured to build a crown structure of the tyre being processed directly on the toroidally-shaped carcass structure of the same tyre being processed.

Preferably, the plant comprises a fourth transfer device configured to transfer the third forming drum, carrying the toroidally-shaped carcass structure, from the shaping station to said crown structure building line.

The crown structure building line is preferably adapted for building at least one belt layer in radially outer position with respect to said shaped carcass structure.

Preferably, the plant also comprises a molding and vulcanization line.

Preferably, the plant also comprises movement devices adapted for transferring the shaped green tyre, exiting from the crown structure building line, to the molding and vulcanization line.

Preferably, the first building path has a greater building cycle time than that of the second building path.

Preferably, the second building path has a building cycle time of less than about 90 s.

Preferably, the first building path has a building cycle time comprised between about 90 s and about 120 s, as a function of the type of tyre being processed.

Preferably, the shaping station and the crown structure building line form, as a whole, a third building path having a longer building cycle time with respect to that of the second building path.

Preferably, the third building path has a building cycle time comparable to that of the first building path, more preferably comprised between about 90 s and about 120 s, as a function of the type of tyre being processed.

The first path, the second path and the third building path are preferably sequential and asynchronous, in other words the tyre being processed is built sequentially along the three building paths that are not synchronized with each other, the waiting station acting as buffer both for the passage of the tyre being processed between the first building path and the second building path and between the second building path and the third building path. Further features and advantages of the present invention will become clearer from the following detailed description of some example embodiments thereof, provided solely as non-limiting examples, said description being made with reference to the attached drawings, in which:
- figure 1 schematically shows a plant for producing tyres for vehicle wheels according to one embodiment of the invention;
- figure 2 shows a radial half-section of a tyre that can be made by means of the process and the plant according to the invention;
- figure 3 schematically shows a plant for producing tyres for vehicle wheels according to a further embodiment of the invention;
- figure 4 schematically shows a preferred embodiment of the plant of figure 3.

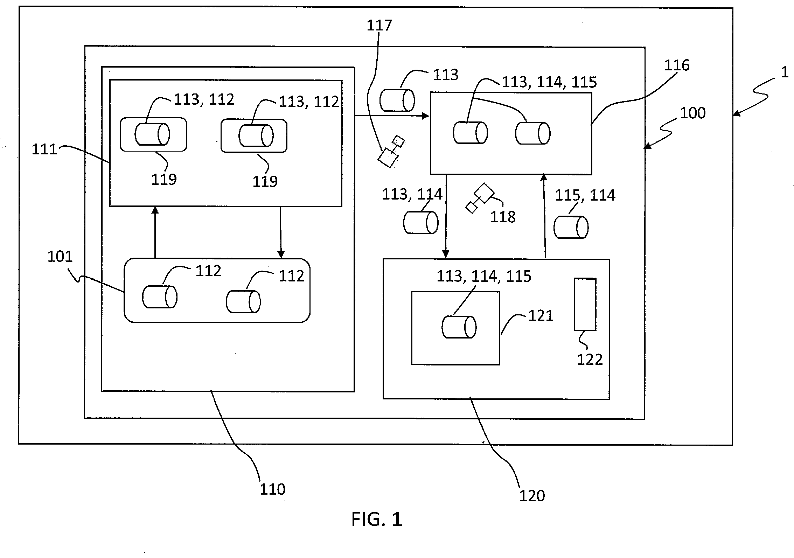

Figure 1 shows a plant 1 for producing tyres 2 for vehicle wheels according to an embodiment of the invention.

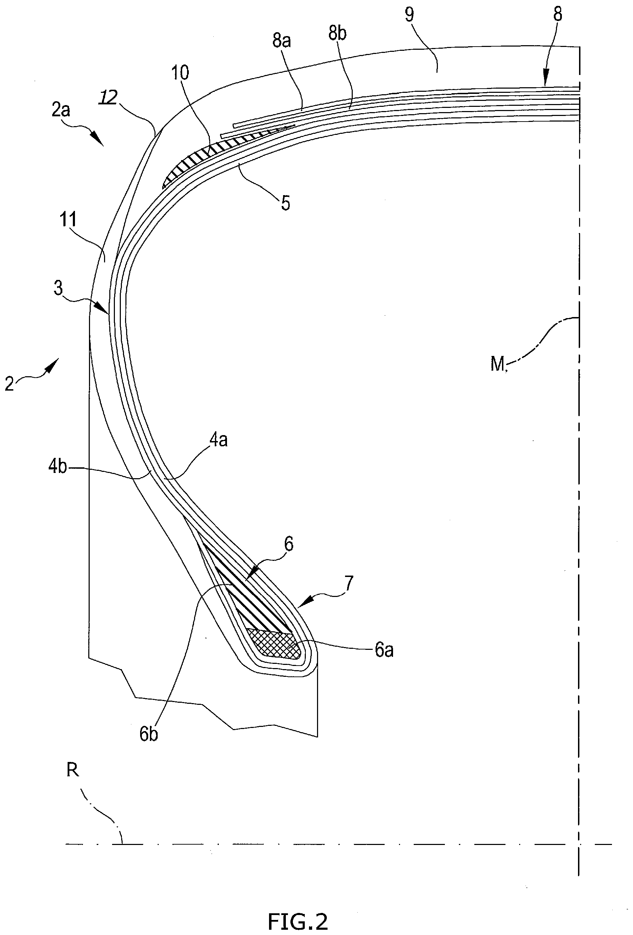

Figure 2 shows an example of tyre 2 that can be produced in the plant 1. The tyre 2 has a mid-plane M perpendicular to the rotation axis R of the tyre 2 (it should be specified that in figure 2 the position of the rotation axis R with respect to the section of the tyre 2 is shown in a totally indicative and schematic manner). The mid-plane M divides the tyre 2 into a first axial half 2a and into a second axial half. For the sake of simplicity of illustration, figure 2 shows only the first axial half 2a of the tyre 2, the other half substantially mirroring it (except for the tread pattern that may not be symmetrical with respect to the aforementioned mid-plane M).

The tyre 2 essentially comprises a carcass structure 3 having one or two carcass plies 4a, 4b. A layer of impermeable elastomeric material or so-called liner 5 is applied to the carcass ply(-ies) 4a, 4b. Two anchoring annular structures 6 (only that of the axial half 2a of which is shown in figure 2) are engaged, in axially opposite positions (with respect to the mid-plane M), with respective axial ends of the carcass ply(-ies) 4a, 4b. The two anchoring annular structures 6 each comprise a so-called bead core 6a carrying an elastomeric filler 6b in radially outer position. The two anchoring annular structures 6 are integrated close to areas usually identified with the name "beads" 7 (only that of the axial half 2a of which is shown in figure 2), at which the engagement between the tyre 2 and a respective mounting rim takes place. A belt structure 8 comprising belt layers 8a, 8b is circumferentially applied around the carcass ply(-ies) 4a, 4b, and a tread band 9 is circumferentially juxtaposed over the belt structure 8. The belt structure 8 can comprise a further so-called zero degrees layer (not illustrated) in radially outer position with respect to the aforementioned layers 8a, 8b. The belt structure 8 can also be associated with so-called "under-belt inserts" 10 each arranged between the carcass ply(-ies) 4a, 4b and one of the axially opposite end edges of the belt structure 8. Two sidewalls 11, each extending from the corresponding bead 7 to a corresponding side edge of the tread band 9, are applied in axially opposite positions (with respect to the mid-plane M) on the carcass ply(-ies) 4a, 4b. The whole of the portion of each sidewall 11 close to the respective side edge of the tread band 9 and of each portion of the tread band 9 close to the respective sidewall 11 is known as shoulder of the tyre.

With particular reference to figure 1, the plant 1 comprises a carcass structure building line 100.

According to the invention, the carcass structure building line 100 is divided into two building sub-lines, in other words a first building path 110 and a second building path 120. Between the first building path 110 and the second building path 120 a waiting station 116 is arranged.

The first building path 110 comprises a work area 111 with a plurality of work stations 119 and a storage area 101 adapted for storing first forming drums 112, each first forming drum 112 preferably having a greater deposition diameter than the fitting diameter of the tyre being processed.

Preferably, the storage area 101 is adapted for storing NxM first forming drums 112, where M is an integer greater than or equal to 1 and represents a predetermined number of different fitting diameters that can be produced in the production plant 1. N is an integer greater than or equal to 1 and represents a predetermined number of first forming drums 112 having the same fitting diameter, among the M different fitting diameters. For example N is equal to 5. For example, M is equal to 4 or 5. In an embodiment, the M different fitting diameters are consecutive. For example, the fitting diameters can be selected in a range that goes from 13 inches to 28 inches. Preferably, the carcass structure building line 100 can simultaneously process different fittings, more preferably the aforementioned different fittings are consecutive fittings, even more preferably the aforementioned different fittings are at least five.

The case of N>1 and, preferably, M > 1 advantageously makes it possible to produce many tyres simultaneously having the same fitting diameter and, preferably, different fitting diameters, selected among the M possible ones.

Figure 1 shows, purely as an example and for the sake of simplicity of illustration, two work stations 119, with two respective first forming drums 112, in the work area 111 and two first forming drums 112 in the storage area 101.

In the first building path 110, a certain number of first forming drums 112, taken from the storage area 101, is moved simultaneously between predetermined work stations 119 of the first building path 110, arranged to form, on each first forming drum 112, a carcass sleeve 113 of a tyre 2 being processed, according to a predetermined recipe for such a tyre being processed. In particular, the first forming drums 112 are preferably moved between the work stations of the first building path 110 according to a sequence defined by a reference specification that can be programmed/configured for every tyre being processed. This advantageously makes it possible to obtain a high technological flexibility.

The first forming drums 112 are taken from the storage area 101 and brought back into it at the end of a building cycle of a respective carcass sleeve 113, through the use of suitable movement devices (not shown). Such movement devices are adapted for taking from the storage area 101 the first forming drums 112 that have, among the M different fitting diameters, fitting diameter(s) corresponding to that/those of the tyres being processed. Suitable movement devices (not shown) are also present in the work area 111 to move the first forming drums 112 between the work stations 119 of the first building path 110. Such movement devices preferably comprise anthropomorphous robotized arms. Even more preferably, said anthropomorphous robotized arms have at least 6 movement axes.

Preferably, the first forming drums 112 are substantially cylindrical. Preferably, they have a greater axial extension than the axial extension of the carcass sleeve 113 of the tyre being processed. More preferably the axial extension of the first forming drums makes it possible to build carcass plies with a minimum width of about 300 mm and a maximum width of about 1000 mm.

The first forming drums 112 are preferably adapted for radially contracting at least by a few millimeters. This is in order to facilitate the extraction of the respective carcass sleeves 113, once built, from the first forming drums 112. Preferably, at least part of the work stations 119 is equipped with suitable devices for dispensing and depositing elementary semi-finished products (not shown), in other words continuous elongated elements and/or strip like elements. Preferably, at least some work stations 119 are each equipped with two or more dispensing devices adapted for dispensing elementary semi-finished products different from each other (preferably by the type of elastomeric material and/or by the type of textile and/or metal reinforcing cord) so as to make it possible to select the type of elementary semi-finished product to be dispensed, depending on the predetermined recipe for the tyre being processed. This advantageously makes it possible to obtain a high technological flexibility.

The first building path 110 comprises, for example, at least some of the following work stations:
- a station provided with devices adapted for applying, through spiraling of a continuous elongated element, anti-abrasive inserts in radially outer position with respect to a respective first forming drum 112;
- a liner application station provided with devices adapted for applying, by means of spiraling of a continuous elongated element, a layer of liner in radially outer position with respect to a respective first forming drum 112;
- an underliner application station provided with devices adapted for applying, by means of spiraling of a continuous elongated element, a layer of underliner in a radially outer position with respect to said liner;
- an optional sidewall insert application station, preferably by means of spiraling of a continuous elongated element;
- a ply application station provided with devices adapted for applying, by means of deposition of strip like elements, at least one first carcass ply in radially outer position with respect to the underliner;
- an optional metal and/or textile reinforcement application station;
- an optional under-belt insert application station provided with devices adapted for applying, by means of spiraling of a continuous elongated element, under-belt inserts in radially outer position with respect to said at least one first carcass ply.

The first building path 110 does not provide a bead forming operation that, on the other hand, is made in the second building path 120. In other words, the first building path 110 is adapted for building the carcass sleeve 113 without anchoring annular structures, whereas the second building path 120 is adapted for building a carcass structure 115, comprising the carcass sleeve 113 with axially opposite ends engaged with respective anchoring annular structures.

With particular reference to figure 1, the plant 1 also comprises a first transfer device 117. Preferably, the first transfer device 117 is configured to engage the carcass sleeve 113 and dissociate, at the last operative work station of the first building path 110, the carcass sleeve 113, built in the first building path 110, from the respective first forming drum 112. The dissociation of the carcass sleeve 113 from the respective first forming drum 112 is carried out only after having engaged the carcass sleeve 113 with the first transfer device 117. In this way, the carcass sleeve 113 is supported with continuity, obtaining the correct centering and integrity of the tyre being processed. Preferably, the first transfer device 117 is also configured to transfer the carcass sleeve 113, dissociated from the respective first forming drum 112, in the waiting station 116 and, in said waiting station 116, associate the carcass sleeve 113 with a respective second forming drum 114. The carcass sleeve 113 is released by the first transfer device 117 only after having associated it with the respective second forming drum 112. In this way, the carcass sleeve 113 is supported with continuity, obtaining the correct centering and integrity of the tyre being processed.

Preferably, the first transfer device 117 is configured to support the carcass sleeve 113 from the outside, for example by means of a suitable rigid outer containment member (not shown), suitably profiled. Preferably, said containment member is adapted for radially expanding/contracting to allow the dissociation/association of the carcass sleeve 113.

In a preferred embodiment, the waiting station 116 comprises M second forming drums 114, one for each of the M different fitting diameters. Purely as an example and for the sake of simplicity of illustration, figure 1 shows two second forming drums 114. Preferably, the first transfer device 117 is configured to associate the carcass sleeve 113, coming from the first building path 110, with the respective second forming drum 114 that has, among the M different fitting diameters, a fitting diameter corresponding to that of the tyre being processed.

The waiting station 116 preferably comprises M support members (not illustrated) configured to support the M second forming drums 114.

In another preferred embodiment (not shown), the waiting station 116 comprises 2xM second forming drums 114, two for each of the M different fitting diameters. This advantageously makes it possible to have a second forming drum 114 per fitting diameter ready and waiting (in a suitable storage area, not illustrated), while the other is in use.

Preferably, each second forming drum 114 is generally cylindrical with two axial end portions, in which the deposition diameter is greater than the fitting diameter of the tyre being processed. Preferably, each second forming drum 114 has a shorter axial extension than the axial extension of the carcass sleeve 113 of the tyre being processed. Each second forming drum 114 is also preferably adapted for radially contracting so as to release the beads once formed. Preferably, the two axial end portions of each second forming drum 114 can move apart and towards one another along an axial direction so as to increase and, respectively, decrease, the axial extension of the second forming drum 114 as a function of the geometric features (for example section width and/or height of the sidewalls) of the tyre being processed. Preferably, the support members (not illustrated) of the second forming drums 114 are configured to arrange the second forming drum 114, before the loading of the carcass sleeve 113 onto it, so that the axial extension thereof corresponds to the geometric features (for example section width and/or height of the sidewalls) of the tyre being processed. This, advantageously, makes it possible to produce tyres having different geometric features, for each fitting diameter, obtaining a high geometric flexibility of the plant 1.

Again with reference to figure 1, the second building path 120 comprises a bead forming station 121 and a bead core storage station 122.

Preferably, the bead forming station 121 is a single multi-fitting station, in other words it is capable of operating on a second forming drum 114 at a time, having any of the M different fitting diameters.

According to techniques known in the art, the bead forming station 121 is configured to carry out, on a second forming drum 114 at a time, the engagement of axially opposite ends of the carcass sleeve 113 with respective anchoring annular structures so as to form the carcass structure 115 of the tyre being processed. In particular, the bead forming station 121 is configured to position the anchoring annular structures at the axially opposite ends of the carcass sleeve 113 and fold said ends on the same carcass sleeve 113 so as to form turnings that contain said anchoring annular structures.

Preferably, the application of the anchoring annular structures is preceded by a transfer step of bead cores, which are adapted for forming said anchoring annular structures, from the bead core storage station 122 to the bead forming station 121. The transfer of the bead cores is preferably carried out by means of a suitable movement device (not shown).

The plant 1 also comprises a second transfer device 118 configured to transfer the second forming drum 114, with the carcass sleeve 113 associated with it, from said waiting station 116 to said bead forming station 121 and to transfer the second forming drum 114, with the carcass structure 115 formed on it, from the bead forming station 121 to said waiting station 116.

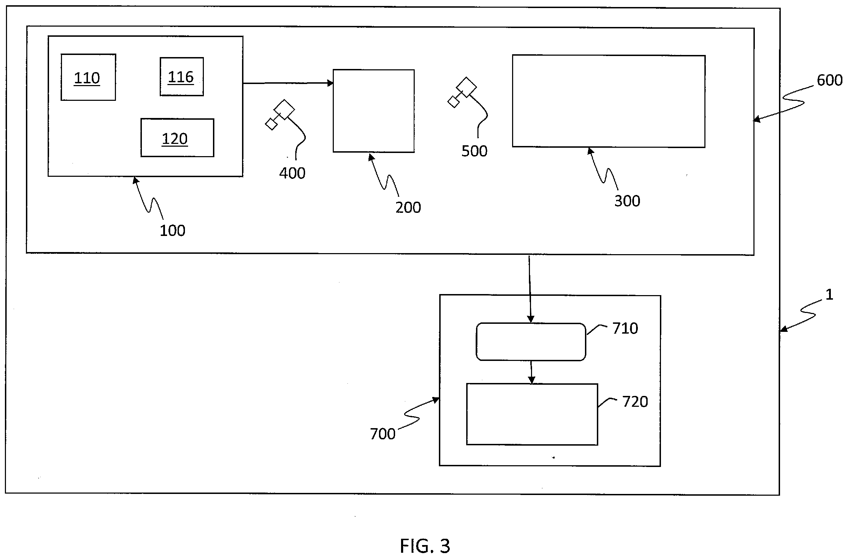

Figure 3 shows the plant 1 according to an embodiment of the invention.

The plant 1 according to this embodiment comprises a shaped green tyre building line 600 and a molding and vulcanization line 700 operatively arranged downstream of the building line 600. The building line 600 comprises a carcass structure building line 100, a shaping station 200 and a crown structure building line 300.

As far as the structural and functional features of the carcass structure building line 100 are concerned, reference should be made to what has already been described above with reference to figure 1.

The shaping station 200 is adapted for toroidally shaping the carcass structures 115 built by the carcass structure building line 100.

The plant 1 according to this embodiment also comprises a third transfer device 400 configured to transfer the carcass structure 115 from the waiting station 116 to the shaping station 200.

The plant 1 also comprises a fourth transfer device 500 operative between the shaping station 200 and the crown structure building line 300.

The crown structure building line 300 comprises a plurality of work stations (not illustrated) arranged to form a crown structure for the tyre being processed, said crown structure comprising at least one belt structure and a tread band.

Preferably, at least part of the work stations of the crown structure building line 300 is equipped with suitable dispensing and deposition devices of elementary semi-finished products (not shown), in other words continuous elongated elements and/or strip like elements. Preferably, at least some work stations are each equipped with at least two dispensing devices adapted for dispensing elementary semi-finished products different from each other (preferably by type of elastomeric material and/or by type of textile and/or metal reinforcing cord) so as to make it possible to select the type of elementary semi-finished product to be dispensed, depending on the predetermined recipe for the tyre being processed. This advantageously makes it possible to obtain a high technological flexibility.

The molding and vulcanization line 700 comprises a storage area 710 adapted for storing the green tyres built in said building line 600 and a molding and vulcanization area 720 comprising a plurality of vulcanizers (not shown). The molding and vulcanization line 700 also comprises movement devices (not shown) adapted for transferring the green tyres from the storage area 710 to said plurality of vulcanizers. Moreover, it is associated with movement devices (not shown) adapted for transferring the green tyres built by the building line 600 to the storage area 710.

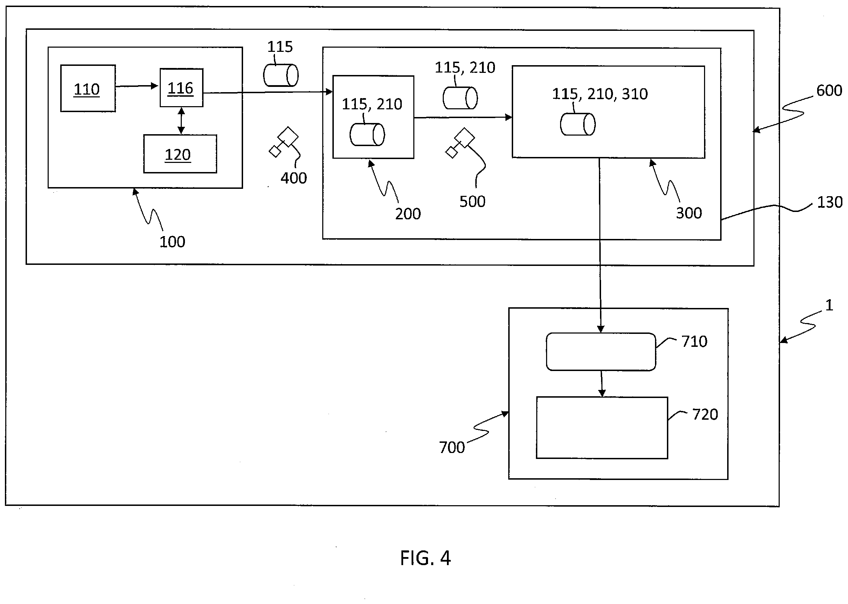

Figure 4 shows a preferred embodiment of the plant 1 of figure 3.

According to this preferred embodiment, the crown structure building line 300 is configured to build a crown structure 310 of the tyre being processed directly on the carcass structure 115, already toroidally shaped, of the same tyre being processed.

The shaping station 200 comprises suitable carcass structure engagement devices (not shown), configured to support the carcass structure 115 during the toroidal shaping.

A suitable manipulator (not illustrated) manages the automatic set-up of said carcass structure engagement devices by taking a specific tool, for the fitting required by the production, from a suitable tool storage buffer (not illustrated).

In the embodiment of figure 4, the third transfer device 400 is configured to dissociate the carcass structure 115 from the respective second forming drum 112, transfer the carcass structure 115, dissociated from the second forming drum 112, from the waiting station 116 to the shaping station 200 and to associate the carcass structure 115 with said carcass structure engagement devices of the shaping station 200. The dissociation of the carcass structure 115 from the respective second forming drum 114 is carried out only after having engaged the carcass structure 115 with the third transfer device 400. Moreover, the carcass structure 115 is released by the third transfer device 400 only after having associated it with the carcass structure engagement devices. In this way, the carcass structure 115 is supported with continuity, obtaining the correct centering and integrity of the tyre being processed.

The third transfer device 400 is configured to support the carcass structure 115 from the outside, for example by means of a suitable rigid outer containment member, suitably profiled. Preferably, said containment member is adapted for radially expanding/contracting to allow the dissociation/association of the carcass structure 115.

The shaping station 200 preferably comprises shaping devices configured to shape the carcass structure 115 according to a toroidal configuration.

The shaping of the carcass structure 115 can be carried out according to techniques known in the art, described for example by WO 2015/079344 to the same Applicant.

The shaping station 200 preferably comprises a third toroidal forming drum 210.

In a preferred embodiment, before shaping, the third forming drum 210 is arranged in a first radially contracted operative condition and is thus arranged in radially inner position with respect to the carcass structure 115, supported by the aforementioned carcass structure engagement devices.

Preferably, the shaping devices are adapted for toroidally shaping the carcass structure 115 while the third forming drum 210 is in the first radially contracted operative condition, inside the carcass structure 115.

During or after the toroidal shaping, the third forming drum 210 is expanded through suitable actuator devices (not shown) avoiding the contact with the carcass structure 115 up to a second radially expanded operative condition.

The toroidally-shaped carcass structure 115 is therefore released by the aforementioned carcass structure engagement devices and associated with the third forming drum 210 in said second radially expanded operative condition.

According to a preferred embodiment of the present invention, the shaping station 200 is multi-fitting, in other words it is capable of shaping carcass structures having M different fitting diameters.

According to this preferred embodiment, the third forming drum 210 is preferably capable of radially expanding/contracting so as to reproduce M different fitting diameters.

According to this preferred embodiment, for every fitting diameter, the third forming drum 210 can preferably be arranged, through the use of interchangeable sectors (for example able to be selected from a suitable storage area, not shown), to reproduce L third forming drums that differ from one another by geometric features (for example section width and/or height of the sidewalls) of the tyre being processed and/or different toroidal profiles, where L is an integer greater than or equal to 1. Preferably, L is at least equal to 2, more preferably at least greater than or equal to 5, even more preferably less than or equal to 15.

According to this preferred embodiment, the shaping station 200 is preferably configured to arrange, before the arrival of the carcass structure 115 of the tyre being processed, said carcass structure engagement devices and the third forming drum 210 so as to adapt them to the fitting diameter and/or to the geometric features (for example section width and/or height of the sidewalls) and/or to the toroidal profile of the tyre being processed.

In the implementation of figure 4, the fourth transfer device 500 is configured to transfer the third forming drum 210, associated with the toroidally-shaped carcass structure 115, from the shaping station 210 to the crown structure building line 300.

The built green tyre, exiting from the crown structure building line 300 is then dissociated from the third forming drum 210 and transferred to the molding and vulcanization line 700.

Preferably, the third forming drum 210 is radially expandable/contractible. This is in order to facilitate the dissociation thereof from the green tyres, once built.

According to techniques known in the art, described for example by WO 2015/079344 to the same Applicant, the crown structure building line 300 is preferably adapted for building the crown structure 310 of the tyre being processed in radially outer position with respect to said toroidally-shaped carcass structure 115, and associated with the third forming drum 210.

The crown structure building line 300 comprises, for example, at least some of the following work stations:
- an optional under-belt insert application station (present unless such a station is already comprised in the first building path 110) provided with devices adapted for applying, by means of spiralling, a continuous elongated element;
- a station provided with devices adapted for applying belt layers by means of deposition of strip like elements;
- a station provided with devices adapted for applying a zero degrees belt layer by means of spiraling of a continuous elongated element;
- a station provided with devices adapted for applying an underlayer by means of spiraling of a continuous elongated element;
- at least one station provided with application devices of tread band by means of spiraling of a continuous elongated element;
- a station provided with application devices of conductive insert, for example by means of spiraling of a continuous elongated element;
- a station provided with low sidewall application devices by means of spiraling of a continuous elongated element;
- a station provided with application devices of anti-abrasive inserts by means of spiraling of a continuous elongated element;
- a station provided with high sidewall application devices by means of spiraling of a continuous elongated element.

The low sidewall and high sidewall application devices advantageously make it possible to make the sidewalls of the tyre according to the SOT constructive scheme. This is advantageous because it makes it possible to further increase the quality and performance of the tyres produced by the production plant. Indeed, according to the SOT constructive scheme the maximum flexing point of the tyre is at a central part of the sidewall, which is made of uniform material. According to the TOS constructive scheme, on the other hand, the maximum flexing point of the tyre could be at a joining point between different materials constituting the tread band and the sidewall, with consequent possible formation of cracks.

In the implementation of figure 4, the first building path 110, the second building path 120 and a third building path 130, formed by the shaping station 200 and by the crown structure building line 300, are sequential and asynchronous, in other words the tyre being processed is built sequentially along the three building paths 110, 120, 130 that are not synchronized with each other. According to the invention, this is obtained thanks to the presence and to the features of the waiting station 116 that acts as buffer both for the passage of the tyre being processed between the first 110 and the second 120 building path and for the passage of the tyre being processed between the second 120 and the third 130 building path. In particular, the waiting station 116 is an intermediate preparation and waiting station, in which a waiting second forming drum 114 is every time suitably selected (among M second forming drums 114 at M different fitting diameters) and prepared (in particular in terms of axial extension) as a function of the geometric features of the tyre being processed arriving from the first building path 110. Moreover, once the carcass sleeve 113 has been loaded on the respective second forming drum 114, it remains in the waiting station 116, waiting to be transferred into the bead forming station 121. Moreover, the carcass structure 115 coming from the bead forming station 121 remains in the waiting station 116, waiting to be transferred into the shaping station 200.

From the present description it will be clear that the present invention in its various aspects makes it possible to produce tyres with high geometric and technological flexibility and high productivity, simplifying the plant from the structural and logistical point of view.

In particular, the present invention makes it possible to carry out the building of the carcass structure without the need to use any auxiliary support element. This makes it advantageously possible to obtain advantages in terms of improvement of layout and accessibility to the work stations as well as of reduction of the building times, of the number of resources required and of overall dimension. The elimination of the need to use auxiliary support elements also makes it possible to further increase the quality and performance of the finished tyres, avoiding potential imbalances or disuniformities from being created, that are linked to the removal operation of the auxiliary support elements.

Moreover, according to the invention, the tyres being processed, during the entire production path, are always supported by a suitable inner support (for example by a forming drum) or a rigid outer containment (for example by a transfer device) suitably profiled. This makes it advantageously possible to obtain the correct centering and integrity of the green tyre being processed, during the entire building path thereof.

In addition, as already described above, in the embodiment of figure 4, the invention makes it possible to make the sidewalls of the tyre according to the SOT constructive scheme (see for example the tyre 2 depicted in figure 2), making it possible to further increase the quality and the performance of the tyres produced by the production plant.

In the embodiment of figure 4, the present invention also makes it possible to make the crown structure on the carcass structure built according to a precise predetermined profile, set by the geometric configuration of the third forming drum, advantageously adaptable based on the design parameters of the tyre being processed. As a result of this, there is a greater constructive precision of the single components of the crown structure and of their positioning with respect to the other constituent elements of the tyre.

In the embodiment of figure 4, making the crown structure directly on the carcass structure, the present invention also makes it possible to overcome problems of precision and repeatability of the process typically linked to the need to couple structural components (carcass structure and crown structure) made separately. A simplification of the production plants is also achieved, since it is not required to carry out addition operations and to have relative machinery to carry out the transfer of the belt structure and/or of other geometrically unstable components from the stations in which they are built to the station in which they must be coupled with the carcass structure itself. This also eliminates the execution of additional operations, and relative machinery and materials, required for the production and the management of auxiliary components, typically useful or necessary to temporally stabilize the positioning of the different parts of the crown structure before it is coupled with the carcass structure.

In addition, in the embodiment of figure 4, the invention makes it advantageously possible to produce tyres in a wide range of fitting diameters, up to a lower limit of 13 inches and an upper limit of 28 inches. This is thanks to the fact that, not having to act as shaping drum of the carcass structure, the first forming drum and the second forming drum can be light drums of simple construction, adapted for also making a relatively small fitting diameter, preferably with a lower limit of 13 inches.

## Claims

1. Process for producing tyres (2) for vehicle wheels comprising, for each tyre being processed:
- building a carcass sleeve (113) on a first forming drum (112),
- dissociating the carcass sleeve (113) from the first forming drum (112) after having associated it with a first transfer device (117) and transferring it into a waiting station (116) by means of said first transfer device (117),
- in said waiting station (116), releasing the carcass sleeve (113) from said first transfer device (117), after having associated it with a second forming drum (114),
- transferring the second forming drum (114), with the carcass sleeve (113) associated with it, from said waiting station (116) to a bead forming station (121) to carry out, on the second forming drum (114), the engagement of axially opposite ends of the carcass sleeve (113) to respective anchoring annular structures so as to form a carcass structure (115),
- transferring the second forming drum (114), with the carcass structure (115) associated with it, from said bead forming station (121) to said waiting station (116).

2. Process according to claim 1, wherein before the association of the carcass sleeve (113) with the second forming drum (114), it is provided to arrange the second forming drum (114) so that its axial extension corresponds to geometric features of the tyre being processed.

3. Process according to claim 1 or 2, wherein the first forming drum (112) is selected from N first forming drums (112) having a fitting diameter corresponding to that of the tyre being processed, from M different fitting diameters, where M and N are each an integer greater than or equal to 1.

4. Process according to any one of the preceding claims, wherein, in said waiting station (116), the association of the carcass sleeve (113) with said second forming drum (114) is carried out by selecting the second forming drum (114) that has, from M second forming drums having M different fitting diameters, a fitting diameter corresponding to that of the tyre being processed, where M is an integer greater than or equal to 1.

5. Process according to any one of the preceding claims, comprising the transfer of the carcass structure (115) from the waiting station (116) to a shaping station (200) adapted to toroidally shape the carcass structure (115).

6. Process according to claim 5, wherein it is provided to build a crown structure (310) of the tyre being processed directly on the toroidally-shaped carcass structure (115) of the same tyre being processed, with the carcass structure (115) associated with a third forming drum (210).

7. Plant (1) for producing tyres (2) for vehicle wheels, comprising a carcass structure building line (100) that comprises:
- a first building path (110) comprising at least one work station (119) for building, for each tyre being processed, a carcass sleeve (113) on a first forming drum (112);
- a waiting station (116);
- a first transfer device (117) configured to: engage the carcass sleeve (113), dissociate the carcass sleeve (113) thus engaged from the first forming drum (112), transfer the carcass sleeve (113), dissociated from the first forming drum (112), in the waiting station (116) and, in said waiting station (116), associate the carcass sleeve (113) with a second forming drum (114);
- a second building path (120) comprising a bead forming station (121) to carry out, on the second forming drum (114), the engagement of axially opposite ends of the carcass sleeve (113) to respective anchoring annular structures so as to form a carcass structure (115),
- a second transfer device (118) configured to transfer the second forming drum (114), with the carcass sleeve (113) associated with it, from said waiting station (116) to said bead forming station (121) and to transfer the second forming drum (114), with the carcass structure (115) formed on it and associated with it, from the bead forming station (121) to said waiting station (116).

8. Plant (1) according to claim 7, wherein the waiting station (116) is configured to arrange, before the association of the carcass sleeve (113) with the second forming drum (114), the second forming drum (114) so that its axial extension corresponds to geometric features of the tyre being processed.

9. Plant (1) according to claim 7 or 8, wherein the first forming drum (112) is substantially cylindrical with a greater axial extension than the axial extension of the carcass sleeve (113) of the tyre being processed.

10. Plant (1) according to any one of claims 7 to 9, wherein the second forming drum (114) is substantially cylindrical with a shorter axial extension than the axial extension of the carcass sleeve (113) of the tyre being processed.

11. Plant (1) according to any one of claims 7 to 10, wherein the second forming drum (114) has an adjustable axial extension.

12. Plant (1) according to any one of claims 7 to 11, wherein the first building path (110) comprises a storage area (101) adapted to store NxM first forming drums (112), where N and M are each an integer greater than or equal to 1, M represents a predetermined number of different fitting diameters and N represents a predetermined number of first forming drums (112) having the same fitting diameter, among the M different fitting diameters.

13. Plant (1) according to any one of claims 7 to 12, wherein said waiting station (116) comprises M second forming drums (114), one for each of M different fitting diameters, where M is an integer greater than or equal to 1.

14. Plant (1) according to any one of claims 7 to 13, wherein said bead forming station (121) is a single multi-fitting station.

15. Plant (1) according to any one of claims 17 to 14, also comprising a shaping station (200) comprising shaping devices configured to shape the carcass structure (115) according to a toroidal configuration.

## Patentansprüche

1. Verfahren zur Herstellung von Reifen (2) für Fahrzeugräder, umfassend für jeden in Bearbeitung befindlichen Reifen:
- Fertigen einer Karkassenhülle (113) an einer ersten Formungstrommel (112),
- Trennen der Karkassenhülle (113) von der ersten Formungstrommel (112), nachdem diese einer ersten Transfereinrichtung (117) zugeordnet worden ist, und Übertragen in eine Wartestation (116) mittels der ersten Transfereinrichtung (117),
- Freigeben der Karkassenhülle (113) von der ersten Transfereinrichtung (117), nachdem diese einer zweiten Formungstrommel (114) zugeordnet wurde, in der Wartestation (116),
- Übertragen der zweiten Formungstrommel (114) mit der ihr zugeordneten Karkassenhülle (113) von der Wartestation (116) an eine Wulstbildungsstation (121), um an der zweiten Formungstrommel (114) das Ineingriffbringen axial gegenüberliegender Enden der Karkassenhülle (113) mit jeweiligen ringförmigen Verankerungsstrukturen durchzuführen, um so eine Karkassenstruktur (115) zu bilden,
- Übertragen der zweiten Formungstrommel (114) mit der ihr zugeordneten Karkassenstruktur (115) von der Wulstbildungsstation (121) an die Wartestation (116).

2. Verfahren nach Anspruch 1, wobei vor der Zuordnung der Karkassenhülle (113) mit der zweiten Formungstrommel (114) vorgesehen wird, die zweite Formungstrommel (114) so anzuordnen, dass ihre axiale Erstreckung geometrischen Merkmalen des in Bearbeitung befindlichen Reifens, entspricht.

3. Verfahren nach Anspruch 1 oder 2, wobei die erste Formungstrommel (112) ausgewählt ist aus N ersten Formungstrommeln (112) mit einem Passdurchmesser aus M verschiedenen Passdurchmessern entsprechend dem in Bearbeitung befindlichen Reifens, wobei M und N ganze Zahlen größer oder gleich 1 sind.

4. Verfahren nach einem der vorhergehenden Ansprüche, wobei in der Wartestation (116) die Zuordnung der Karkassenhülle (113) mit der zweiten Formungstrommel (114) durchgeführt wird, indem jene zweite Formungstrommel (114) gewählt wird, die aus M zweiten Formungstrommeln mit M verschiedenen Passdurchmessern einen Passdurchmesser aufweist, der dem in Bearbeitung befindlichen Reifen entspricht, wobei M eine ganze Zahl größer oder gleich 1 ist.

5. Verfahren nach einem der vorhergehenden Ansprüche, umfassend die Übertragung der Karkassenstruktur (115) von der Wartestation (116) an eine Zurichtstation (200), die dazu geeignet ist, die Karkassenstruktur (115) in eine Ringform zu bringen.

6. Verfahren nach Anspruch 5, wobei vorgesehen wird, eine Zenithstruktur (310) des in Bearbeitung befindlichen Reifens direkt auf der in Ringform gebrachten Karkassenstruktur (115) desselben in Bearbeitung befindlichen Reifens zu fertigen, wobei die Karkassenstruktur (115) einer dritten Formungstrommel (210) zugeordnet ist.

7. Anlage (1) zur Herstellung von Reifen (2) für Fahrzeugräder, umfassend eine Karkassenstruktur-Fertigungslinie (100), die umfasst:
- einen ersten Fertigungspfad (110), umfassend zumindest eine Arbeitsstation (119) zur Fertigung einer Karkassenhülle (113), für jeden in Bearbeitung befindlichen Reifen an einer ersten Formungstrommel (112);
- eine Wartestation (116);
- eine erste Transfereinrichtung (117), die dazu ausgestaltet ist: mit der Karkassenhülle (113) in Eingriff zu gelangen, die so in Eingriff gebrachte Karkassenhülle (113) von der ersten Formungstrommel (112) zu trennen, die Karkassenhülle (113), die von der ersten Formungstrommel (112) getrennt wurde, in die Wartestation (116) zu übertragen, und in der Wartestation (116) die Karkassenhülle (113) mit einer zweiten Formungstrommel (114) in Zuordnung zu bringen;
- einen zweiten Fertigungspfad (120), umfassend eine Wulstbildungsstation (121), um an der zweiten Formungstrommel (114) das Ineingriffbringen axial gegenüberliegender Enden der Karkassenhülle (113) mit jeweiligen ringförmigen Verankerungsstrukturen durchzuführen^, um so eine Karkassenstruktur (115) zu bilden,
- eine zweite Transfereinrichtung (118), die dazu ausgestaltet ist, die zweite Formungstrommel (114) mit der ihr zugeordneten Karkassenhülle (113) von der Wartestation (116) an die Wulstbildungsstation (121) zu übertragen und die zweite Formungstrommel (114) mit der an ihr gefertigten und ihr zugeordneten Karkassenstruktur (115) von der Wulstbildungsstation (121) an die Wartestation (116) zu übertragen.

8. Anlage (1) nach Anspruch 7, wobei die Wartestation (116) dazu ausgestaltet ist, die zweite Formungstrommel (114) vor der Zuordnung der Karkassenhülle (113) mit der zweiten Formungstrommel (114) so anzuordnen, dass ihre axiale Erstreckung geometrischen Merkmalen des in Bearbeitung befindlichen Reifens entspricht.

9. Anlage (1) nach Anspruch 7 oder 8, wobei die erste Formungstrommel (112) im Wesentlichen zylindrisch mit einer axialen Erstreckung ist, die größer ist als die axiale Erstreckung der Karkassenhülle (113) des in Bearbeitung befindlichen Reifens.

10. Anlage (1) nach einem der Ansprüche 7 bis 9, wobei die zweite Formungstrommel (114) im Wesentlichen zylindrisch mit einer axialen Erstreckung ist, die kürzer ist als die axiale Erstreckung der Karkassenhülle (113) des in Bearbeitung befindlichen Reifens.

11. Anlage (1) nach einem der Ansprüche 7 bis 10, wobei die zweite Formungstrommel (114) eine einstellbare axiale Erstreckung aufweist.

12. Anlage (1) nach einem der Ansprüche 7 bis 11, wobei der erste Fertigungspfad (110) einen Lagerbereich (101) umfasst, der dazu geeignet ist, N x M erste Formungstrommeln (112) zu lagern, wobei N und M jeweils eine ganze Zahl größer oder gleich 1 sind, M eine vorbestimmte Anzahl verschiedener Passdurchmesser darstellt und N eine vorbestimmte Anzahl von ersten Formungstrommeln (112) darstellt, die denselben Passdurchmesser unter den M verschiedenen Passdurchmessern aufweisen.

13. Anlage (1) nach einem der Ansprüche 7 bis 12, wobei die Wartestation (116) M zweite Formungstrommeln (114) umfasst, eine für jeden der M verschiedenen Passdurchmesser, wobei M eine ganze Zahl größer oder gleich 1 ist.

14. Anlage (1) nach einem der Ansprüche 7 bis 13, wobei die Wulstbildungsstation (121) eine einzelne Mehrfach-Montagestation ist.

15. Anlage (1) nach einem der Ansprüche 17 bis 14, ebenfalls umfassend eine Zurichtstation (200), die Zurichteinrichtungen umfasst, die dazu ausgestaltet sind, die Karkassenstruktur (115) entsprechend einer ringförmigen Konfiguration zuzurichten.

## Revendications

1. Procédé de production de pneus (2) pour roues de véhicules comprenant, pour chaque pneu en cours de traitement :
- la construction d'un manchon de carcasse (113) sur un premier tambour de formation (112),
- la dissociation du manchon de carcasse (113) du premier tambour de formation (112) après l'avoir associé à un premier dispositif de transfert (117) et le transférer à un poste d'attente (116) au moyen dudit premier dispositif de transfert (117),
- dans ledit poste d'attente (116), la libération du manchon de carcasse (113) dudit premier dispositif de transfert (117), après l'avoir associé à un deuxième tambour de formation (114),
- le transfert du deuxième tambour de formation (114), avec le manchon de carcasse (113) qui lui est associé, dudit poste d'attente (116) à un poste de formation de talon (121) pour mettre en prise, sur le deuxième tambour de formation (114), des extrémités axialement opposées du manchon de carcasse (113) avec des structures annulaires d'ancrage respectives de manière à former une structure de carcasse (115),
- le transfert du deuxième tambour de formation (114), avec la structure de carcasse (115) qui lui est associée, dudit poste de formation de talon (121) audit poste d'attente (116).

2. Procédé selon la revendication 1, dans lequel avant l'association du manchon de carcasse (113) au deuxième tambour de formation (114), on prévoit d'agencer le deuxième tambour de formation (114) de sorte que son extension axiale corresponde à des caractéristiques géométriques du pneu en cours de traitement.

3. Procédé selon la revendication 1 ou 2, dans lequel le premier tambour de formation (112) est choisi parmi N premiers tambours de formation (112) ayant un diamètre de montage correspondant à celui du pneu en cours de traitement, parmi M diamètres de montage différents, où M et N sont chacun un entier supérieur ou égal à 1.

4. Procédé selon l'une quelconque des revendications précédentes, dans lequel, dans ledit poste d'attente (116), l'association du manchon de carcasse (113) audit deuxième tambour de formation (114) est réalisée en sélectionnant le deuxième tambour de formation (114) qui présente, parmi M deuxièmes tambours de formation ayant M diamètres de montage différents, un diamètre de montage correspondant à celui du pneu en cours de traitement, où M est un entier supérieur ou égal à 1.

5. Procédé selon l'une quelconque des revendications précédentes, comprenant le transfert de la structure de carcasse (115) du poste d'attente (116) vers un poste de façonnage (200) adapté à façonner de manière toroïdale la structure de carcasse (115).

6. Procédé selon la revendication 5, dans lequel on prévoit la construction d'une structure de sommet (310) du pneu en cours de traitement directement sur la structure de carcasse de forme toroïdale (115) du même pneu en cours de traitement, la structure de carcasse (115) étant associée à un troisième tambour de formation (210).

7. Installation (1) de production de pneus (2) pour roues de véhicules, comprenant une chaîne de construction de structure de carcasse (100) qui comprend :
- un premier chemin de construction (110) comprenant au moins un poste de travail (119) pour construire, pour chaque pneu en cours de traitement, un manchon de carcasse (113) sur un premier tambour de formation (112) ;
- un poste d'attente (116) ;
- un premier dispositif de transfert (117) configuré pour : engager le manchon de carcasse (113), dissocier le manchon de carcasse (113) ainsi mis en prise du premier tambour de formation (112), transférer le manchon de carcasse (113), dissocié du premier tambour de formation (112), au poste d'attente (116) et, dans ledit poste d'attente (116), associer le manchon de carcasse (113) à un deuxième tambour de formation (114) ;
- un deuxième chemin de construction (120) comprenant un poste de formation de talon (121) pour mettre en prise, sur le deuxième tambour de formation (114), des extrémités axialement opposées du manchon de carcasse (113) avec des structures annulaires d'ancrage respectives de manière à former une structure de carcasse (115),
- un deuxième dispositif de transfert (118) configuré pour transférer le deuxième tambour de formation (114), avec le manchon de carcasse (113) qui lui est associé, dudit poste d'attente (116) vers ledit poste de formation de talon (121) et pour transférer le deuxième tambour de formation (114), avec la structure de carcasse (115) formée dessus et associée à celui-ci, du poste de formation de talon (121) audit poste d'attente (116).

8. Installation (1) selon la revendication 7, dans laquelle le poste d'attente (116) est configuré pour agencer, avant l'association du manchon de carcasse (113) au deuxième tambour de formation (114), le deuxième tambour de formation (114) de sorte que son extension axiale corresponde à des caractéristiques géométriques du pneu en cours de traitement.

9. Installation (1) selon la revendication 7 ou 8, dans laquelle le premier tambour de formation (112) est sensiblement cylindrique avec une extension axiale supérieure à l'extension axiale du manchon de carcasse (113) du pneu en cours de traitement.

10. Installation (1) selon l'une quelconque des revendications 7 à 9, dans laquelle le deuxième tambour de formation (114) est sensiblement cylindrique avec une extension axiale plus courte que l'extension axiale du manchon de carcasse (113) du pneu en cours de traitement.

11. Installation (1) selon l'une quelconque des revendications 7 à 10, dans laquelle le deuxième tambour de formation (114) a une extension axiale réglable.

12. Installation (1) selon l'une quelconque des revendications 7 à 11, dans laquelle le premier chemin de construction (110) comprend une zone de stockage (101) adaptée pour stocker NxM premiers tambours de formation (112), où N et M sont chacun un entier supérieur ou égal à 1, M représente un nombre prédéterminé de diamètres de montage différents et N représente un nombre prédéterminé de premiers tambours de formation (112) ayant le même diamètre de montage, parmi les M diamètres de montage différents.

13. Installation (1) selon l'une quelconque des revendications 7 à 12, dans laquelle ledit poste d'attente (116) comprend M deuxièmes tambours de formation (114), un pour chacun des M diamètres de montage différents, où M est un entier supérieur ou égal à 1.

14. Installation (1) selon l'une quelconque des revendications 7 à 13, dans laquelle ledit poste de formation de talon (121) est un poste unique modulable.

15. Installation (1) selon l'une quelconque des revendications 7 à 14, comprenant en outre un poste de façonnage (200) comprenant des dispositifs de façonnage configurés pour façonner la structure de carcasse (115) selon une configuration toroïdale.
